# EUROPEAN PATENT APPLICATION

(11) **EP 2 194 306 A2**
(43) Date of publication of application: **09.06.2010**
(21) Application number: 09380180.1
(22) Date of filing: 25.11.2009
(51) Int. Cl.: F16L 21/08

(54) **Bolt-type coupling system for pipes**

(30) Priority: 04.12.2008 ES 200803445
(71) Applicant: Pamican Holding, S.L., 48001 Bilbao (ES)
(72) Inventor: Dominguez Siemens, Francisco José, Bilbao (ES)
(74) Representative: Aymat Gonzalez, José Maria

(57) **Abstract**

Bolt-type coupling system for pipes, in which by means of the new geometry of the support element, improvement is achieved in the mechanical features of the connection. The improvement is evaluated by means of increasing the admissible work pressures and traction stress while keeping constant the thickness of the pipe wall. Using the support element can be carried out by applying a weld bead and subsequent machining, making use of a backup ring for the placement of the weld bead and finally, made jointly in the casting process.

## Description

### SUBJECT OF THE INVENTION

This invention refers to a connection system for pipes, of a bolt type, formed by a cup, a pipe or accessory, a waterproofing element and various blocking elements, placed in such a way that they are capable of supporting the stresses generated by the pressure to which the liquids are subjected that run inside the pipes upon contacting the support element.

The subject of the invention is to achieve a new bolt-type coupling system that permits increasing the range of work pressures without having to increase the thickness of the pipe wall, guaranteeing the waterproof quality of the connection for a limited angle range between the sections. The invention is therefore applicable in the areas of fluid piping.

### BACKGROUND OF THE INVENTION

The current bolt-type coupling systems for pipes are based on the use of four types of pieces: A pipe, a cup, waterproofing elements and a series of blocking elements. The function of the first two is the physical connection of the sections leaving for the blocking elements the restriction of axial movement. Waterproofing of the connection is done by means of the waterproofing elements (tow, elastic joints, labyrinths, etc.).

The fastening of these elements is done by the physical contact between the blocking elements and a support element materialized as a weld bead, giving this process a semicircular cross-section.

These bolt-type pipe systems have two important advantages over the standard couplings. The first is based on the fact that it is not necessary to use concrete blocks to support the stresses due to the pressure and circulation of the flow, since the connection itself manages to support it. The second is based on the fact that they admit a certain angle of misalignment, with this decreasing as the nominal diameters of the pipes increase.

The current models consist of a cup formed by a chamber and a breech. In the first are housed the gasket while in the second are housed the blocking elements of the bolt system. The support element is carried out in the outside surface of the pipe by means of placing a weld bead.

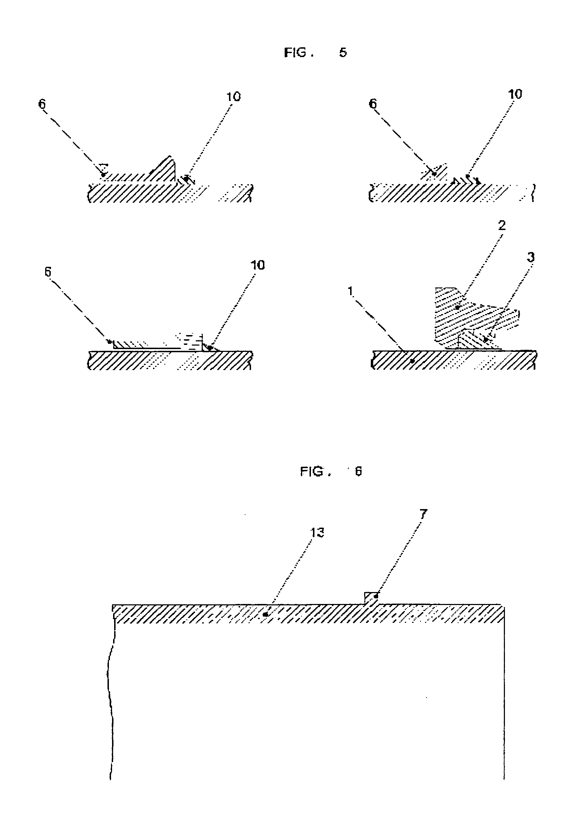

The contact of the blocking elements and the support elements is deficient (shown in **Figure 5****);** this is due to the fact that only a small fraction of the surface of the blocking elements comes in contact with the support element. This can generate the plastification, radial slipping and breakage of the blocking element, producing the failure of the connection. The deficient contact impedes the use of this type of connection when the specifications of pressure are high, limiting the range of commercial applications.

Through the mechanical study of the connection, the conclusion was reached that the weakest area was in the pipe, and more specifically in the support element, on which the locking elements have contact. Therefore, if their features are increased new models of pipes can be achieved without modifying the standardized dimensions in thicknesses and diameters.

The actual processes of manufacturing of pipes and accessories (elbows, Tee's, reductions, valves, etc.) are different. The manufacturing of the pipes is done by means of the centrifugal casting and other processes, while the support elements are manufactured by means of welding or other processes. The centrifugal casting process does not permit manufacturing the support element together with the pipe, due to the impossibility of extraction from the mould. The manufacturing of the accessories is done by means of gravity casting or other processes. The support element is executed by means of weld beads or other processes. There is the possibility of generating the connection set by means of injection of metallic or plastic materials.

### DESCRIPTION OF THE INVENTION

In document EP1460325A2, a connection system is presented for bolt-type pipe couplings, of the type described herein. This invention contributes a new design of the support element, improving the features of the connection described in EP1460325A2.

The invention refers to a connection system for bolt-type connections in accordance with Claims 1 and 2. The preferred realizations of the connection are defined in the dependent claims.

The novelty that this invention contributes to what already exists is a new geometric design with which better features are achieved in the connection, maintaining the original thickness and guaranteeing the waterproof quality for a range of angular misalignment. This new design permits creating the blocking element in the accessories by means of casting, eliminating in this way the welding task with the consequent reduction in costs.

The new design of the blocking element that is proposed is rectangular, also being able to be made square, quarter circle and other shapes that are achieved by a combination of these. The edges have a curved radius or bevel in order to avoid concentrations of stress that can lead to the formation and growth of fissures. At present a semicircular or approximately semicircular shape is made, since that is the shape with which the weld bead is deposited on the pipes. The execution of the blocking element can be done directly in the mould in the casting process, or by means of a weld bead after machining.

By means of the new geometry, a better support of the blocking elements is achieved on the support element. In this way, contact is made surface-surface and not surface-edge as occurs currently. With the use of this new geometry an increase of technical features of the set is produced, increasing the vaiue of the admissible pressures and pulling power. Therefore, the admissible pressure is increased by a significant range, maintaining the same dimensions of the current pipes, by using the support element with the geometric dimensions described in the claims of this document. By achieving an increase in the admissible pulling power, the maximum length on which subterranean piping can be carried out without a trench is increased.

In the installations in which devices are used with the design presented herein, in combination with elements of traditional bolt-type coupling, the working pressure would be limited given that the support element of the traditional designs is weaker.

The improvement of the system proposed over the current ones is based on the improvement of the mechanical properties for the same wall thickness of the pipe; the possibilities of use are increased, for example, increasing the maximum distance in the subterranean perforations.

### DESCRIPTION OF THE DRAWINGS

In order to complement the description of the invention and for the purpose of helping to better understand the characteristics of the system, a set of drawings are included as an integral part of said description, where, including but not limited to this example, the following is represented:
**Figure 1** **-** shows, according to a schematic cross-section of the diameter, a bolt-type coupling system for pipes executed according to the purpose of this invention. In the cross-section one can observe all the pieces that comprise the invention as well as all the areas of relevance.
**Figure 2** **-** shows, according to a schematic cross-section of the diameter, the shape that the support (7) has to have, and the bevels made (8).
**Figure 3** - shows, according to a drawing similar to that of **Figure 2****,** a variant in the geometry of the connection area of the support element (7) and the pipe (1), in which a round piece is used.
**Figure 4** **-** shows, according to a drawing similar to that of **Figure 2****,** a variant in the geometry of the connection area of the support element (7) adopting a semicircular cross-section or similar.
**Figure 5** **-** shows, according to a drawing similar to that of **Figure 2****,** the shape with which the contact is current made between the blocking elements (6) and the support element (10) with a semi-spherical shape; as well as other systems used, with and without the support element (7).
**Figure 6** **-** shows, according to a drawing similar to that of **Figure 2****,** the shape of the pipe accessories (13) with the support element (7).

For the five figures, the parts that compose them are numbered:
(1) Pipe
(2) Cup of the pipe
(3) Waterproofing element
(4) Contact area between segment and support element.
(5) Contact area between segment and cup.
(6) Blocking elements.
(7) Support element.
(8) Bevel in pipe connection and support element.
(9) Rounding in the pipe connection and support element.
(10) Current support element made in semicircular form.
(11) Chamber of the cup
(12) Breech of the cup.
(13) Pipe accessory

### PREFERRED REALIZATION OF THE INVENTION

The connection can be of two types: The first is comprised of a pipe (1), cup (2), various blocking segments (6) and a waterproofing element (3). The second is comprised of a pipe (1) or cup (2), pipe accessory (13) and waterproofing element (3).

### The first type of connection is explained below:

A cup (2) is mounted in the area, seating it correctly; then the waterproofing element (3) is inserted, materialized as a flexible joint in the chamber of the cup (11), in order to continue with the introduction of the pipe (1) in the cup (2). In this step, the smooth end of the pipe (1) slides inside the flexible joint (3), with the external profile of the flexible joint (3) pressing on the interior surface of the cup (2). The last step is to insert through a window housed in the cup (2) the blocking elements (6) formed by metallic wedges. The pipe (1) has a support element (7) with a square-shaped section. The generation of the shape of the support element (7) is accomplished by means of machining a weld bead deposited previously on the entire edge of the pipe (1). The contact between the blocking segments (6) and the support element (7) located in the external part of the pipe (1) is what ensures the connection axially.

### The second type of connection is explained below:

A cup (2) is mounted in the area, seating it correctly; then the waterproofing element (3) is inserted, materialized as a flexible joint in the chamber of the cup (11), in order to continue with the introduction of the pipe accessory (13) in the cup (2). In this step, the smooth end of the pipe accessory (13) slides inside the flexible joint (3), with the external profile of the flexible joint (3) pressing on the interior surface of the cup (2). The last step is to insert through a window housed in the cup (2) the blocking elements (6) formed by metallic wedges. The pipe accessory (13) has a support element (7) with a square-shaped section. The generation of the shape of the support element (7) is accomplished in two ways. The first is by means of machining a weld bead deposited previously on the entire edge of the pipe accessory (13). The second is done jointly with the manufacturing of the pipe accessory (13), by the gravity casting process, injection or other similar processes.

The contact between the blocking segments (6) and the support element (7) located in the external part of the pipe accessory (13) provides the axial restriction.

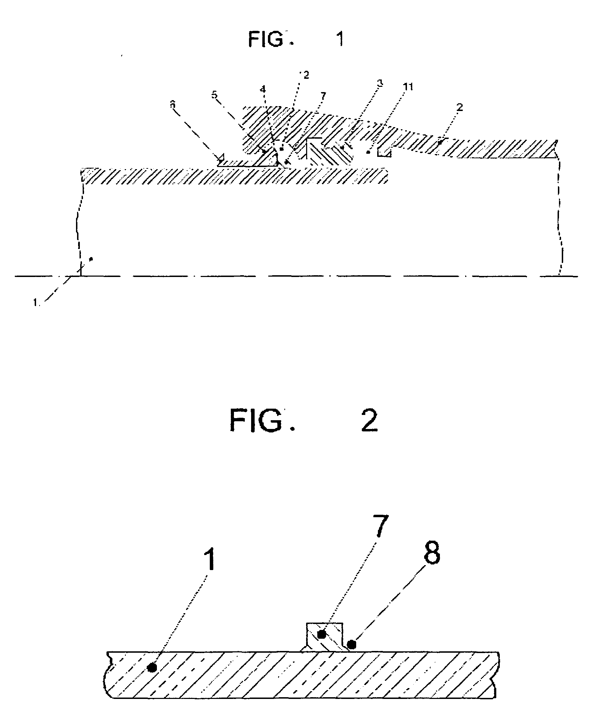

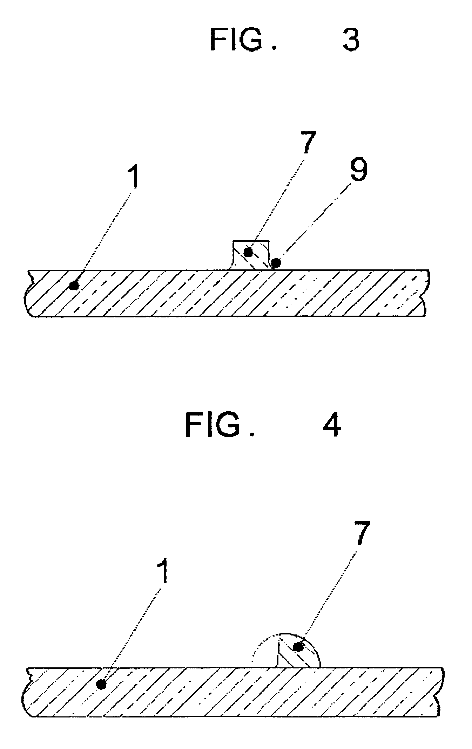

The different manufacturing alternatives of the support element (7) are described in **Figures 1, 2****,** **3** and **4****,** including the manufacturing by deposition of welding and manufacturing integrated in the casting process, injection or similar, shown in **Figure 6****.**

The geometry of the new support element (7) does not imply the modification of the waterproofing element (3) or the blocking segments (6), therefore, the entrance of its pieces has the same or similar clearance as that which it has had up to now. Since the geometries of the cup (2) and the blocking segments (6) are not changed, the same admissible misalignment of the coupling can be guaranteed.

## Claims

1. Bolt-type coupling system, **characterized by** the contact area between the blocking elements (6) and the support element (7) is between two parallel or approximately parallel surfaces, permitting greater working pressures on the connection.

2. Bolt-type coupling system according to Claim 1, **characterized by** the shape of the support element (7) that optimizes the contact between the support element (7) and the blocking element (6). This geometry has a rectangular, square or quarter-circle shape.

3. Bolt-type coupling system according to Claims 1 and 2, **characterized by** a new exclusive industrial process for the realization of the support element (7) in any geometry, for bolt-type pipes and their accessories, using the machining of the support element (7) after applying a weld bead as a base for it.

4. Bolt-type coupling system according to Claims 1 and 2, **characterized by** a new exclusive industrial process for the realization of the support element (7) in any geometry, for bolt-type pipes and their accessories, using a backup ring during the application of the welding in order to achieve the geometry of the proposed support element (7).

5. Bolt-type coupling system according to Claims 1 and 2, **characterized by** a new exclusive industrial process for the realization of the support element (7) in any geometry, for bolt-type pipes and their accessories, using the casting process or injection for the simultaneous casting of the support element (7) and the pipe (1) or pipe accessory (13).

6. Bolt-type coupling system according to Claims 1 and 2, **characterized by** the surface of contact between the support element (7) and the blocking elements (6) being perpendicular or approximately perpendicular to the section of the pipe (1) or pipe accessory (13).

7. Accessories for bolt-type pipes according to Claims 1 and 2, **characterized by** having a support element (7) that is made by moulding, welding or injection, in one, several or all its outlets and inlets, being the male pins with the support element (7), being able to have one or several cups (2) with female form.

8. Accessories for bolt-type pipes according to any of the previous claims, **characterized by** having a support element (7) for the same nominal diameter or similar between the initial part and the end of the pipe, being able to have a variable diameter throughout the length of the accessory in an axial direction.

9. Accessories for bolt-type pipes according to any of the previous claims, **characterized by** having to be mounted on pipes (1) or pipe accessories (13) that have the support element (7).

10. Bolt-type coupling system that has a support element (7) according to any of the previous claims, **characterized by** the materials used in the support element (7) and blocking elements (6), being either ferrous metal or non-ferrous metal, including composites, stainless steel, and light alloys.

11. Valves for industrial pipes or hydraulic pipes according to any of the previous claims, **characterized by** having a support element (7), being connected to pipes that have the support element (7). These valves could be for interior or exterior use on buildings.
